(19) Europäisches Patentamt
European Patent Office
Office européen des brevets

(11) **EP 2 652 833 B1**

(12) **EUROPÄISCHE PATENTSCHRIFT**

(45) Veröffentlichungstag und Bekanntmachung des Hinweises auf die Patenterteilung:
**22.10.2014 Patentblatt 2014/43**

(21) Anmeldenummer: **11790779.0**

(22) Anmeldetag: **30.11.2011**

(51) Int Cl.:
*H01M 10/48* (2006.01)    *B60L 11/18* (2006.01)
*H01M 10/613* (2014.01)    *H01M 10/625* (2014.01)
*H01M 10/633* (2014.01)    *H01M 10/0525* (2010.01)

(86) Internationale Anmeldenummer:
**PCT/EP2011/071369**

(87) Internationale Veröffentlichungsnummer:
**WO 2012/079983 (21.06.2012 Gazette 2012/25)**

(54) **TEMPERATURREGELVERFAHREN FÜR EINEN ELEKTROCHEMISCHEN ENERGIESPEICHER IN EINEM FAHRZEUG**

TEMPERATURE CONTROL METHOD FOR AN ELECTROCHEMICAL ENERGY STORE IN A VEHICLE

PROCÉDÉ DE RÉGULATION THERMIQUE D'UN ACCUMULATEUR D'ÉNERGIE ÉLECTROCHIMIQUE DANS UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2010 DE 102010063376**

(43) Veröffentlichungstag der Anmeldung:
**23.10.2013 Patentblatt 2013/43**

(73) Patentinhaber: **Bayerische Motoren Werke Aktiengesellschaft**
**80809 München (DE)**

(72) Erfinder:
• **FLECKENSTEIN, Matthias**
**84424 Isen (DE)**
• **HÖFLER, Thomas**
**82194 Groebenzell (DE)**
• **WILDE, Andreas**
**82041 Oberhaching (DE)**
• **BOHLEN, Oliver**
**80687 München (DE)**
• **KUHN, Daniel**
**80804 München (DE)**

(56) Entgegenhaltungen:
JP-A- 2001 105 843    US-A1- 2008 012 535
US-A1- 2009 246 606    US-A1- 2010 304 193

**Beschreibung**

Die Erfindung betrifft ein Temperaturregelverfahren für einen elektrochemischen Energiespeicher in einem Fahrzeug, wobei der elektrochemische Energiespeicher zum Zweck seiner Kühlung über eine Kühleinrichtung verfügt, und wobei ein Temperatur-Istwert des elektrochemischen Energiespeichers mit einem Temperaturmessmittel bestimmt und ein Temperatur-Sollwert des elektrochemischen Energiespeichers durch eine Zwei-Punkt-Regeleinrichtung eingestellt wird, welche die Kühleinrichtung bei einer oberen Temperaturgrenze des elektrochemischen Energiespeichers aktiviert und welche die Kühleinrichtung bei einer unteren Temperaturgrenze des elektrochemischen Energiespeichers deaktiviert.

Elektrochemische Energiespeicher gewinnen im Rahmen der fortschreitenden Elektrifizierung des Antriebs von Fahrzeugen für den Personen- und Güterverkehr zunehmend an Bedeutung. Insbesondere sekundäre Energiespeicher im Hochvoltbereich, die auf der Lithium-Ionen-Zelltechnologie basieren, sind Gegenstand aktueller Forschung und Entwicklung. Mehrere Lithium-Ionen-Zellen werden in einem Batteriegehäuse verschaltet und bilden mit der Überwachungs- und Regelelektronik sowie einer Kühleinrichtung das Gesamtsystem eines elektrochemischen Energiespeichers. Da die Batteriezellen in einem schmalen Temperaturband ihren optimalen Betriebsbereich aufweisen und insbesondere bei besonders hoher Temperatur einer beschleunigten Alterung unterliegen, verfügt das System des elektrochemischen Energiespeichers auch über eine Kühleinrichtung zur Kühlung der Zellen, so dass die Zellen eine maximal zulässige Grenztemperatur nicht überschreiten.

Nach dem Stand der Technik werden neben Luftkühlungen auch Flüssigkeitskühlungen genutzt, bei denen ein Kältemittel in einem Kühlkreislauf durch Siedekühlung im elektrochemischen Energiespeicher verdampft wird und in einer Kompressionskältemaschine kondensiert wird. Beispielsweise aus dem Dokument EP 2068390 A1 geht eine solche Kühleinrichtung hervor. Bei der Kühlung des elektrochemischen Energiespeichers fungiert der Wärmeübertrag durch Siedekühlung nicht als Regelgröße. Geregelt wird lediglich der Fluss des Kältemittels. Wie in dem Dokument JP 2001105843 A beschrieben, wird dabei ein Zwei-Punkt-Regler eingesetzt, der die Betriebszustände "Fluss des Kältemittels ein" und "Fluss des Kältemittels aus" einstellt. Zum Zweck der Kühlung einer Batterie aktiviert der Zwei-Punkt-Regler einen Kühlkreislauf bei einer voreingestellten oberen Temperaturgrenze und deaktiviert den Kühlkreislauf bei einer voreingestellten unteren Temperaturgrenze, so dass die Temperatur der Batterie eine Maximaltemperatur nicht übersteigt.

An der festen Voreinstellung der oberen und der unteren Temperaturgrenzen ist nachteilig, dass die maximal erreichte Temperatur des elektrochemischen Energiespeichers während der Kühlung die maximal zulässige Grenztemperatur des elektrochemischen Energiespeichers zwar nicht übersteigt, die Differenz zwischen der maximalen, tatsächlich erreichten Temperatur und der maximal erlaubten Grenztemperatur sich jedoch in den meisten Betriebssituationen als unnötig groß erweist. Um die maximale Grenztemperatur nicht zu überschreiten, wird der elektrochemische Energiespeicher daher im zeitlichen Mittel bei einer kleineren Temperatur als notwendig betrieben. Elektrochemische Energiespeicher verfügen innerhalb des vorgegebenen, optimalen Temperatur-Betriebsbereichs tendenziell über eine höhere Energieeffizienz bei höherer Temperatur. Die Lade- und Entladeeffizienz des Energiespeichers wird also nach dem Stand der Technik nicht bestmöglich genutzt. Außerdem ist ein erhöhter Verschleiß der Kühlungskomponenten zu verzeichnen.

Auch das Dokument US 2008/0012535 A1 offenbart ein Temperaturregelverfahren nach dem Stand der Technik.

Es ist daher eine Aufgabe der Erfindung, ein verbessertes Temperaturregelverfahren für einen elektrochemischen Energiespeicher in einem Fahrzeug anzugeben.

Gelöst wird diese Aufgabe durch ein Temperaturregelverfahren gemäß Anspruch 1. Vorteilhafte Ausführungsformen und Weiterbildungen der Erfindung ergeben sich aus den abhängigen Ansprüchen.

Es wird ein Temperaturregelverfahren für einen elektrochemischen Energiespeicher in einem Fahrzeug beschrieben, wobei der elektrochemische Energiespeicher zum Zweck seiner Kühlung über eine Kühleinrichtung verfügt, und wobei ein Temperatur-Istwert des elektrochemischen Energiespeichers mit einem Temperaturmessmittel bestimmt und ein Temperatur-Sollwert des elektrochemischen Energiespeichers durch eine Zwei-Punkt-Regeleinrichtung eingestellt wird, welche die Kühleinrichtung bei einer oberen Temperaturgrenze des elektrochemischen Energiespeichers aktiviert und welche die Kühleinrichtung bei einer unteren Temperaturgrenze des elektrochemischen Energiespeichers deaktiviert. Erfindungsgemäß wird die obere Temperaturgrenze der Zwei-Punkt-Regeleinrichtung und/oder die untere Temperaturgrenze der Zwei-Punkt-Regeleinrichtung während des Betriebs des elektrochemischen Energiespeichers oder während der Aktivierung der Kühleinrichtung zeitabhängig festgelegt und es wird die obere Temperaturgrenze der Zwei-Punkt-Regeleinrichtung und/oder die untere Temperaturgrenze der Zwei-Punkt-Regeleinrichtung in Abhängigkeit von Energiespeicherdaten und/oder Fahrzeugbetriebsdaten festgelegt.

Die Erfindung hat zum Vorteil, dass die Temperaturgrenzen, bei denen die Kühleinrichtung mit dem Zwei-Punkt-Regler geschaltet wird, nicht vorfestgelegt sind, sondern in Abhängigkeit von bestimmten Betriebs- oder Umgebungsbedingungen variabel eingestellt werden. Ohne dass eine maximal zulässige Grenztemperatur überschritten wird, kann die Kühlleistung im Vergleich zu einer Kühlung mit festen Schaltgrenzen effizienter eingesetzt werden. Dies kommt beispielsweise darin zum Ausdruck, dass bei bestimmten Betriebs- und Umgebungssituationen die obere Temperaturgrenze zur Aktivierung der Kühlung des elektrochemischen Energiespeichers in Richtung höherer Temperatur verschoben werden kann, so dass der Temperaturverlauf des elektrochemischen Energiespeichers während der Kühlung eine kleinere minimale Differenz zur maximal zulässigen Grenztemperatur aufweist. In einer anderen Betriebssituation kann es vorteilhaft sein, die Deaktivierung der Kühlung des elektrochemischen Energiespeichers bei einer erhöhten unteren Temperaturgrenze erfolgen zu lassen, wenn nach dem Abschalten der Kühlung aus bestimmten Gründen ein verringerter Wärmeeintrag in den elektrochemischen Energiespeicher abzusehen ist.

Beispielsweise können für das Temperaturregelverfahren Energiespeicherdaten und Fahrzeugbetriebsdaten herangezogen werden, die auf mindestens einem Steuergerät des Fahrzeugs oder einem Speichermedium des Fahrzeugs gespeichert werden und die wahlweise mit Messmitteln im Fahrzeug bestimmt werden oder durch Berechnung oder Simulation, die auf einem Steuergerät durchgeführt wird, bestimmt werden. Die Daten können auch von einer Kommunikationseinrichtung des Fahrzeugs empfangen werden. Für das Temperaturregelverfahren dienen die Energiespeicherdaten und die Fahrzeugbetriebsdaten als Eingangsgrößen.

Es ist besonders vorteilhaft, neben der Ist-Temperatur als Eingangs- und Regelgröße des elektrochemischen Energiespeichers weitere Parameter des elektrochemischen Energiespeichers als Eingangsgrößen zu nutzen. Die aufgezeichneten Daten erlauben Rückschlüsse auf den bevorstehenden Wärmeeintrag in den elektrochemischen Energiespeicher und damit auf eine bevorstehende Kühlleistungsanforderung. Mit einer solchen Prognose ist der Einsatz von Kühlleistung optimierbar, wodurch die Häufigkeit von Einschalt- und Ausschaltvorgängen verringert werden kann. Dies trägt zu einer längeren Lebensdauer der Kühlkomponenten bei. Außerdem ergibt sich durch eine bedarfsgerechte Optimierung des Kühlleistungseinsatzes eine im zeitlichen Mittel höhere Betriebstemperatur des elektrochemischen Energiespeichers. Da entsprechend der Regelaufgabe die Ist-Temperatur des elektrochemischen Energiespeichers nicht über die maximale zulässige Grenztemperatur steigt, führt dies zu keiner beschleunigten Alterung der Batteriezellen. Stattdessen kommt es wegen der verbesserten Lade- und Entladeeffizienz des Energiespeichers über einen langen Beobachtungszeitraum zu einer verbesserten Gesamtenergiebilanz des Energiespeichers.

Gemäß einer bevorzugten Ausführungsform der vorliegenden Erfindung enthalten die Energiespeicherdaten eine Aufzeichnung des Temperatur-Istwerts des elektrochemischen Energiespeichers in Abhängigkeit von der Zeit, um einen zeitabhängigen Temperaturgradienten aus der Aufzeichnung des Temperatur-Istwerts zu bestimmen. In Abhängigkeit von dem zeitabhängigen Temperaturgradienten wird die obere Temperaturgrenze der Zwei-Punkt-Regeleinrichtung und/oder die untere Temperaturgrenze der Zwei-Punkt-Regeleinrichtung festgelegt.

Mit diesem Vorgehen wird die Rate des Temperaturverlaufs in das Regelverfahren einbezogen. Die obere Temperaturgrenze kann etwa bei einer kleinen Temperatur-Anstiegsrate, bei der die Kühlung aktiviert wird, in Richtung höherer Temperatur verschoben werden. Bei einer hohen Temperatur-Anstiegsrate muss die Aktivierung der Kühlung bereits bei niedrigerer Temperatur erfolgen, so dass durch die thermische Trägheit des Systems die maximal zulässige Grenztemperatur des elektrochemischen Energiespeichers zu keinem Zeitpunkt überschritten wird. Dieses Verfahren entspricht dem Prinzip eines Differentialreglers, um das Überschwingen der Regelgröße zu mindern.

Erfindungsgemäß enthalten die Energiespeicherdaten eine zeitabhängige Aufzeichnung des Lade- und Entladestroms des elektrochemischen Energiespeichers und eine zeitabhängige Aufzeichnung der Spannung des elektrochemischen Energiespeichers. Aus der Aufzeichnung des Stroms und der Aufzeichnung der Spannung wird ein zeitabhängiger relativer Ladezustand des elektrochemischen Energiespeichers bestimmt und die obere Temperaturgrenze der Zwei-Punkt-Regeleinrichtung und/oder die untere Temperaturgrenze der Zwei-Punkt-Regeleinrichtung werden in Abhängigkeit von dem zeitabhängigen relativen Ladezustand festgelegt.

Für das Betriebsverhalten und das Verschleißverhalten eines elektrochemischen Energiespeichers ist es besonders vorteilhaft, wenn der Energiespeicher nicht nur in einem bevorzugten Temperaturbereich betrieben wird, sondern auch in einem bevorzugten Ladezustandsbereich. Deshalb ist es besonders günstig, sowohl die obere Temperaturgrenze für die Aktivierung der Kühlung als auch die untere Temperaturgrenze für die Deaktivierung der Kühlung bei stark erniedrigtem Ladezustand des Energiespeichers in Richtung höherer Temperatur zu verschieben. Bei einem sehr kleinen Ladezustand kann der Energiespeicher in einem Fahrzeug mit elektrifiziertem Antrieb nur noch bedingt für Entladungen mit hohen Strömen, zum Beispiel um das Fahrzeug anzutreiben, genutzt werden. In erster Näherung hat dies eine geringere Kühlleistungsanforderung als bei höherem Ladezustand zur Folge. Außerdem kommt es durch die Erhöhung der Temperaturgrenzen zu einer verbesserten Ladeeffizienz. Diese unterstützt eine zügige Erhöhung des relativen Ladezustands des Energiespeichers in den bevorzugten Ladezustandsbereich.

Erfindungsgemäß wird aus der Aufzeichnung des Stroms und der Aufzeichnung der Spannung ein zeitabhängiger Innenwiderstand des elektrochemischen Energiespeichers bestimmt und die obere Temperaturgrenze der Zwei-Punkt-Regeleinrichtung und/oder die untere Temperaturgrenze der Zwei-Punkt-Regeleinrichtung in Abhängigkeit von dem zeitabhängigen Innenwiderstand festgelegt.

Die Erzeugung von Joule'scher Wärme, die als Verlust von Stromwärme während der elektrochemischen Umsetzung in Erscheinung tritt, verhält sich direkt proportional zum Innenwiderstand des Energiespeichers. Deshalb ist die Kenntnis des Wertes des Innenwiderstands für eine effiziente und betriebsoptimierte Auslegung einer Temperaturregelung von großem Vorteil. Bei einer relativen Änderung des Innenwiderstandes in Richtung eines größeren Werts, ist ein erhöhter Wärmeeintrag in den Energiespeicher durch zunehmende Verlustleistung die Folge. In diesem Fall ergibt sich durch Integration der Verlustleistung über einen geeigneten Zeitraum ein erhöhter Wert und die obere und/oder die untere Temperaturgrenze werden in Richtung kleinerer Temperatur verschoben.

Zusätzlich können die Fahrzeugbetriebsdaten eine zeitabhängige Aufzeichnung einer Umgebungstemperatur des Fahrzeugs enthalten und die obere Temperaturgrenze der Zwei-Punkt-Regeleinrichtung und/oder die untere Temperaturgrenze der Zwei-Punkt-Regeleinrichtung können in Abhängigkeit von der Umgebungstemperatur festgelegt werden.

Es ist besonders vorteilhaft, die Temperaturgrenzen der Kühlerschaltung bei einer hohen Umgebungstemperatur in Richtung kleinerer Temperaturwerte zu verschieben und bei einer niedrigen Umgebungstemperatur in Richtung höherer Temperatur zu verschieben. Im Fall einer niedrigen Umgebungstemperatur wird der Kühleffekt des Energiespeichers durch Wärmeleitung und/oder Konvektion an dem Ort der geometrischen Unterbringung des Energiespeichers gezielt genutzt, um die eingesetzte Kühlleistung der Kühleinrichtung zu minimieren.

Gemäß einer weiteren Ausführungsform der Erfindung enthalten die Fahrzeugbetriebsdaten das Streckenprofil einer bevorstehenden Fahrtroute, die von einer Navigationseinrichtung des Fahrzeugs bestimmt wird. Zusätzlich enthalten die Fahrzeugbetriebsdaten Informationen zur Verkehrslage entlang der bevorstehenden Fahrtroute und Informationen einer Wettervorhersage am Standort des Fahrzeugs und entlang der bevorstehenden Fahrtroute, die von einer Kommunikationseinrichtung des Fahrzeugs empfangen werden. Die obere Temperaturgrenze der Zwei-Punkt-Regeleinrichtung und/oder die untere Temperaturgrenze der Zwei-Punkt-Regeleinrichtung werden in Abhängigkeit von charakteristischen Merkmalen des Streckenprofils und/oder der Verkehrslage und/oder der Wettervorhersage festgelegt.

Der Temperaturverlauf eines elektrochemischen Energiespeichers wird neben dem Innenwiderstand insbesondere von der Höhe der auftretenden Lade- und Entladeströme bestimmt. Die Verlustleistung durch Joule'sche Wärme steigt mit dem Quadrat des Batteriestroms. Eine bevorstehende Fahrtroute, die überdurchschnittlich viele Kurven oder Steigungen aufweist, hat zum Beispiel bei einem Fahrzeug mit elektrifiziertem Antrieb überdurchschnittlich viele Entladephasen mit hohem Entladestrom zur Folge. Dem resultierenden hohen Wärmeeintrag in den Energiespeicher wird mit einer Verschiebung der Temperaturgrenzen für die Aktivierung und Deaktivierung der Kühlung in Richtung kleinerer Temperaturwerte entgegengewirkt. Lässt die Verkehrslage auf der bevorstehenden Route darauf schliessen, dass durch häufige Stop & Go-Fahrmanöver, wie sie beispielsweise in Stausituationen oder bei hoher Verkehrsdichte auftreten, ein erhöhter Wärmeeintrag in den Energiespeicher beim Befahren der Route erfolgen wird, werden die Temperaturgrenzen ebenfalls in Richtung kleinerer Werte verschoben. Es ist auch von Vorteil, charakteristische Merkmale der Wettervorhersage entlang einer bevorstehenden Fahrtroute oder am Standort des Fahrzeugs zu berücksichtigen. Ist beispielsweise entlang einer Fahrtroute Niederschlag prognostiziert, ist erfahrungsgemäß eine geringere mittlere Geschwindigkeit zu erwarten, was beispielsweise bei einem Fahrzeug mit elektrifiziertem Antrieb mit einem geringeren Wärmeeintrag in den Energiespeicher einhergeht. Die Temperaturgrenzen für die Kühlungsschaltung können also in Richtung höherer Werte verschoben werden.

Die Fahrzeugbetriebsdaten können auch Informationen zu einem Nutzerverhalten enthalten, das einen bestimmten Fahrer des Fahrzeugs charakterisiert, wobei der Fahrer durch eine Identifikationsvorrichtung im Fahrzeug identifiziert wird. Das Nutzerverhalten eines bestimmten Fahrers wird aus der Aufzeichnung des Lade- und Entladestroms des elektrochemischen Energiespeichers oder aus einer Aufzeichnung von Beschleunigungs- und Verzögerungswerten des Fahrzeugs über einen langen Beobachtungszeitraum ermittelt. Die obere Temperaturgrenze der Zwei-Punkt-Regeleinrichtung und/oder die untere Temperaturgrenze der Zwei-Punkt-Regeleinrichtung werden in Abhängigkeit von charakteristischen Merkmalen des Nutzerverhaltens eines bestimmten Fahrers festgelegt.

An dieser Ausführungsform ist besonders vorteilhaft, dass fahrerspezifische Merkmale, die ein bestimmtes Belastungsprofil für den Energiespeicher zur Folge haben, bei der Festlegung der Temperaturgrenzen für die Schaltung der Kühlung berücksichtigt werden. Ein bestimmter Fahrer kann über ein geeignetes Interface mit dem Fahrzeug identifiziert werden, etwa mit einem bestimmten elektronischen Schlüssel oder durch Eingabe an einer Mensch-Maschine-Kommunikationseinheit im Fahrzeug. Wird ein Fahrer identifiziert, von dem Eigenschaften seines Nutzerverhalten gespeichert sind und der beispielsweise als besonders dynamisch charakterisiert ist, d.h. dass er zum Beispiel besonders häufig extreme Beschleunigungs- oder Bremsmanöver durchführt, die einen hohen Wärmeeintrag in den Energiespeicher zur Folge haben, werden die Temperaturgrenzen für die Kühleinrichtung in Richtung kleinerer Temperatur verschoben.

Die Erfindung beruht auf den nachfolgend dargelegten Überlegungen: Batteriezellen der Lithium-Ionen-Technologie weisen ihren optimalen Betriebsbereich nur in einem begrenzten Temperaturband auf, das durch Effizienz der Zellen und Alterungsgeschwindigkeit der Zellen vorgegeben ist. Lithium-Ionen-Batteriezellen werden in elektrochemischen Energiespeichern idealerweise in einem Temperaturband zwischen + 5 Grad Celsius und + 40 Grad Celsius betrieben. Mit steigender Temperatur besitzen solche Batteriezellen zumeist einen besseren Wirkungsgrad, neigen über einer maximal zulässigen Grenztemperatur jedoch zu einer beschleunigten Alterung. Ein gleichmäßiger Betrieb der Zellen bei hoher Temperatur, aber unterhalb der maximal zulässigen Grenztemperatur, ist hinsichtlich ihrer Effizienz vorteilhaft. Deshalb ist beim Betrieb von elektrochemischen Energiespeichern mit derartigen Batteriezellen insbesondere beim Einsatz in einem Fahrzeug mit elektrifiziertem Antrieb eine Temperierung notwendig. Um diese einerseits möglichst exakt und andererseits möglichst effizient auszuführen, kommt der Erfassung des thermischen Ist-Zustandes der Batteriezellen und einer damit verknüpften Regelstrategie eine wichtige Bedeutung zu. Zur Realisierung einer Batterietemperierung wird aufgrund der hohen Leistungsfähigkeit gemäß des Stands der Technik häufig eine Flüssigkeitskühlung herangezogen. Eine Flüssigkeitskühlung ist zumeist nicht als stetig variables Temperierungssystem ausgeführt. Demnach ist die Wärmeabfuhr aus den Batteriezellen an das Kühlmedium nicht direkt regelbar. Lediglich der Betriebszustand des Kühlkreislaufes (Betrieb an und Betrieb aus) kann geschaltet werden. Die Temperaturregelung beim Kühlen und Heizen der Batteriezellen mit nicht stetig variablen Temperierungseinheiten geschieht bekanntermaßen mit einem Zwei-Punkt-Regler. Als Regelgröße wird hierbei meist eine gemessene Batterie-Zelltemperatur verwendet. Für den Kühlvorgang bedeutet die Zwei-Punkt-Regelung, dass der Kühler beim Überschreiten eines festgelegten Sollwertes der Batterie-Zelltemperatur eingeschaltet wird und beim Unterschreiten eines festgelegten Sollwertes der Batteriezellen-Temperatur wieder ausgeschaltet wird. Die Umsetzung der Kühlung gemäß dem Stand der Technik ist mit folgenden Nachteilen verbunden: Bei bisherigen Systemen mit starren Ein- und Ausschaltschwellwerten der Zwe-Punkt-Regelung wird zumeist eine zu große Temperaturdifferenz zwischen maximal erlaubter Grenztemperatur der Batteriezelle und Kühlungseinschalttemperatur gewählt, so dass ein thermischer Sicherheitsabstand für alle Fahr- und Umgebungsbedingungen eingehalten wird, um auch bei kritischen Bedingungen die maximale Grenztemperatur nicht zu überschreiten. Der Betrieb der Batteriezellen in einem niedrigeren und damit ineffizienteren Temperaturbereich ist die Folge. Die damit verbundene Steigerung des Kühlungsaufwands führt zu einem häufigeren Ein- und Ausschaltvorgang des Kühlungskreislaufes, das den Verschleiß der Kühlkreislaufkomponenten erhöht und den Speicherwirkungsgrad zusätzlich reduziert. Folgende Maßnahme wird vorgeschlagen, um die Nachteile des Stands der Technik zu beseitigen: Bei der Zwei-Punkt-Temperaturregelung eines elektrochemischen Energiespeichers mit einer Flüssigkeitskühlung und Bestimmung der Batterie-Zelltemperatur werden die Schaltparameter der Kühlung in Abhängigkeit von Fahrzeug- und Speichersignalen verschoben. Folgende Vorteile werden durch die beschriebene Variation der Schalttemperaturen erzielt: Die Kühlung der Zellen erfolgt exakter und führt zu einem zeitlich homogeneren und wärmeren Temperaturverlauf der Batteriezellen. Deshalb wird der Betrieb des Energiespeichers effizienter ohne eine Erhöhung des Risikos, zu Lasten beschleunigter Alterung die maximal zulässige Grenztemperatur zu überschreiten. Die Betriebszeit der Kühlung kann reduziert werden, was die Energieeffizienz des Fahrzeugs zusätzlich steigert. Leistungseinschränkungen des Energiespeichers aufgrund zu hoher Temperatur werden vermieden, da extreme Belastungen vorhergesagt werden. Die reduzierte Zahl von Ein- und Ausschaltvorgängen der Kühlung führt zu einem geringeren Verschleiß der Kühlkreislaufkomponenten. Eine Vorkonditionierung für Extrembelastungen und für Standphasen in Abhängigkeit von (witterungsbedingten) Umgebungseinflüssen verhindert bzw. reduziert den Betrieb oder die Lagerung der Batteriezellen bei für die Alterung kritischen Temperaturen.

Im Folgenden wird ein bevorzugtes Ausführungsbeispiel der Erfindung beschrieben. Daraus ergeben sich weitere Details, bevorzugte Ausführungsformen und Weiterbildungen der Erfindung.

Bei einem Zwei-Punkt-Regler für die Kühlung eines elektrochemischen Energiespeichers mit Lithium-Ionen-Zellen wird als Regel- und Beobachtungsgröße eine mit einem Temperatursensor gemessene zeitabhängige Ist-Temperatur einer Batteriezelle verwendet, die hier als $T_{ist}(t)$ bezeichnet wird. Dabei handelt es sich um eine Messung an einer zellanschlussnahen Position einer repräsentativen Zelle des gesamten Energiespeichers. Ein Temperatur-Sollwert an dieser Messstelle wird dadurch erreicht, dass die Kühlung in Form eines Kühlkreislaufs mit einem Verdampfungs-Kältemittel und einem Kältemittel-Kompressor bei einer oberen Temperaturgrenze, hier als $T_{oG}$ bezeichnet, aktiviert und bei einer unteren Temperaturgrenze, hier als $T_{uG}$ bezeichnet, deaktiviert wird. Ferner werden mit einen hochohmigen Widerstand die zeitabhängige Spannung des Energiespeichers, hier als $U(t)$ bezeichnet, und mit einem niederohmigen Widerstand der Strom des Energiespeichers, hier als $I(t)$ bezeichnet, gemessen, um einen Innenwiderstand oder eine Impedanz, hier als $R(t)$ bezeichnet, zu bestimmen. In einfachster Näherung kann dies nach dem Ohm'schen Gesetz erfolgen. Außerdem wird durch Messung der Ruhespannung des Energiespeichers und durch zeitabhängige Integration des Stroms ein relativer Ladezustand, hier als $SoC(t)$ bezeichnet, bestimmt. Die Joule'sche Verlustleistung, hier als $P_v(t)$ bezeichnet, kann nach $P_v(t) = R(t) \cdot I(t)^2$ abgeschätzt werden. Die eingeführten Energiespeicherdaten $U(t)$, $I(t)$, $SoC(t)$, $R(t)$ und $P_v(t)$ werden zum Beispiel auf einem Steuergerät gespeichert.

In Abhängigkeit von den aufgezeichneten Daten des Energiespeichers können die Temperaturgrenzen zum Schalten der Kühlung variiert werden. Es kann zum Beispiel eine Änderung der oberen Temperaturgrenze im Vergleich zu einem zuvor ermittelten Wert, wobei die Änderung hier als $\Delta T_{oG}$ bezeichnet wird, festgelegt werden, die vom Temperaturverlauf des Energiespeichers abhängt. Mit dem Gradienten der Ist-Temperatur $\dot{T}_{ist}(t)$, der durch die erste Ableitung der Ist-Temperatur nach der Zeit gegeben ist, gilt für die Änderung $\Delta T_{oG} \propto -\dot{T}_{ist}(t)$. Das heißt, dass bei einer zunehmenden Rate des Temperaturanstiegs die obere Temperaturgrenze $T_{oG}$ in Richtung eines kleineren Temperaturwertes verschoben wird. Dementsprechend kann bei einer zunehmenden Rate des Temperaturabfalls während der Kühlung die untere Temperaturgrenze in Richtung eines höheren Temperaturwerts gemäß $\Delta T_{uG} \propto -\dot{T}_{ist}(t)$ verschoben werden. Falls der relative Ladezustand unterhalb eines vorgegebenen Ladezustand-Grenzwertes, hier als $SoC_G$ bezeichnet, sinkt, d.h. dass der Energiespeicher stark entladen ist, kann die obere Temperaturgrenze gemäß $\Delta T_{oG} \propto +(SoC_G - SoC(t))$ angehoben werden. Ebenso kann die untere Temperaturgrenze gemäß $\Delta T_{uG} \propto +(SoC_G - SoC(t))$ angehoben werden. Bei stark erniedrigtem Ladezustand weist der Energiespeicher im Regelfall eine sinkende Anforderung von Kühlleistung auf. Ferner wird die Aufladung des Energiespeichers in den mittleren Ladezustandsbereich, der über dem Ladezustand-Grenzwert liegt, unterstützt, indem durch die Anhebung der Temperaturgrenzen eine verbesserte Ladungsaufnahmefähigkeit des Energiespeichers angestrebt wird. Auch die abgeschätzte Verlustleistung $P_v(t)$ kann zur Variation der Temperaturgrenzen zum Schalten der Kühleinrichtung genutzt werden. Zum Beispiel kann die obere Temperaturgrenze nach

$$\Delta T_{oG} \propto -\int_{t-\Delta t}^{t} P_V \, dt$$ geändert werden, wobei $\Delta t$ ein

bestimmtes Zeitintervall vor dem aktuellen Zeitpunkt t darstellt. In Worten ausgedrückt wird die obere Temperaturgrenze, bei der die Kühlung aktiviert wird, am Ende eines bestimmten Zeitraums $\Delta t$ umso weiter in Richtung kleinerer Temperatur verschoben, je größer die gesamte erzeugte Stromwärme in dem Zeitraum war.

Die Variation der beiden Temperaturgrenzen $T_{oG}$ und $T_{uG}$ kann auch in Abhängigkeit von gespeicherten Fahrzeugbetriebsdaten erfolgen. Zum Beispiel kann mit einem Temperatursensor die Umgebungstemperatur des Fahrzeugs, hier als $T_U(t)$ bezeichnet, zeitabhängig gemessen werden. Falls die Umgebungstemperatur von einer vorgegebenen Referenztemperatur $T_{ref}$ abweicht, wird die obere Temperaturgrenze gemäß $\Delta T_{oG} \propto -(T_U(t) - T_{ref})$ und/oder die untere Temperaturgrenze gemäß $\Delta T_{uG} \propto -(T_U(t) - T_{ref})$ verändert. Falls die Umgebungstemperatur also die Referenztemperatur übersteigt, werden die Temperaturgrenzen in Richtung kleinerer Temperaturwerte angepasst. Falls die Umgebungstemperatur unterhalb der Referenztemperatur liegt, erfolgt eine Anpassung in Richtung höherer Temperatur. Wenn nur eine der beiden Temperaturgrenzen verändert wird, kann die Temperaturhysterese, die sich aus der Temperaturdifferenz zwischen der oberen Temperaturgrenze $T_{oG}$ und der unteren Temperaturgrenze $T_{uG}$ ergibt, verändert werden. Beispielsweise kann der Energiespeicher durch eine Verschiebung der unteren Temperaturgrenze $\Delta T_{uG}$ in Richtung kleinerer Temperatur für eine der Fahrt folgenden Standphase bei warmer Umgebungstemperatur vorgekühlt werden.

Zu diesem Zweck können die Fahrzeugbetriebsdaten neben der Umgebungstemperatur das Profil einer zum Zeitpunkt t bevorstehenden Fahrtroute beinhalten. Die Fahrtroute kann etwa von einem GPS-Navigationssystem berechnet werden. Charakteristische Merkmale einer bevorstehenden Fahrt können dem Temperaturregelverfahren als Eingangsgröße dienen. Ein charakteristisches Merkmal einer Fahrtroute ist beispielsweise eine Häufung von Kurven oder Steigungen. Über eine Kommunikationseinrichtung, zum Beispiel über eine GSM-Verbindung, können zu den Routendaten weitere Informationen empfangen werden. Dies umfasst zum Beispiel einen Verkehrslagebericht. Daten zur aktuellen Verkehrslage können die Routendaten sinnvoll ergänzen. Eine hohe Verkehrsdichte oder Stau lassen beispielsweise häufige Anfahr- und Bremsmanöver entlang der Route erwarten. Mit der Kenntnis von einer Fahrt mit einer Vielzahl von Kurven, häufigen Steigungen oder im Stop & Go-Verkehr kann die erwartete Verlustwärme

$\int_{t}^{t+\Delta t} \widehat{P_V}(t) \, dt$ zumindest grob abgeschätzt werden,

wobei $\Delta t$ für ein bevorstehendes Zeitintervall und $\widehat{P_V}(t)$ für eine prognostizierte Verlustleistung vom aktuellen Zeitpunkt $t$ bis zum zukünftigen Zeitpunkt $t + \Delta t$ stehen. Bei einer hohen erwarteten Verlustwärme kann zum Beispiel die obere Temperaturgrenze gemäß

$\Delta T_{oG} \propto -\int_{t}^{t+\Delta t} \widehat{P_V}(t) \, dt$ angepasst werden. Das bedeutet, dass bei einer hohen Verlustleistungsprognose die Aktivierung der Kühlung bei einer erniedrigten Einschalttemperatur erfolgt.

Über die Kommunikationseinrichtung des Fahrzeugs können auch Wetterinformationen empfangen werden und als Parameter für die Verschiebung der Temperaturgrenzen genutzt werden. Die Entwicklung der Wettersituation entlang einer bevorstehenden Fahrtroute kann die in dem Energiespeicher stattfindende Wärmeentwicklung $\int_{t}^{t+\Delta t} \widehat{P_V}(t) \, dt,$ die auf der Prognose der Verlustleistung basiert, beeinflussen. Infolge der erwarteten Umgebungstemperatur kann etwa von einer verbesserten indirekten Kühlung des Energiespeichers im Bauraum ausgegangen werden, wenn die Fahrt zum Beispiel in höhere gelegene, kältere Luftschichten führt.

Bei der Verschiebung der Temperaturgrenzen kann einem solchen Effekt beispielsweise durch einen Wetter-Gewichtungsfaktor *gw* in $g_W \cdot \int_t^{t+\Delta t} \widehat{P_V}(t)\,dt$ Rechnung getragen werden. Im geschilderten Fall mit verbesserter Kühlung kann der Gewichtungsfaktor $g_W$ einen Wert zwischen 0 und 1 einnehmen, so dass eine Verschiebung der Temperaturgrenze in Richtung kleinerer Temperatur gemäß $\Delta T_{oG} \propto -g_W \cdot \int_t^{t+\Delta t} \widehat{P_V}(t)\,dt$ gezielt abgeschwächt werden kann.

Eine ähnliche Vorgehensweise ist umsetzbar, wenn Kenntnis von typischen Merkmalen des Fahrverhaltens eines bestimmten Fahrers besteht. Ein bestimmter Fahrer kann vom Fahrzeug identifziert werden, zum Beispiel durch die Nutzung eines exklusiv dem Fahrer zugewiesenen elektronischen Fahrzeugschlüssels oder durch manuelle Eingabe oder Spracheingabe am Fahrerarbeitsplatz. Während der Fahrt eines bestimmten Fahrers können verschiedene Daten, die Rückschlüsse auf sein Fahrprofil erlauben, aufgezeichnet und ausgewertet werden. Solche Daten könnten zum Beispiel Beschleunigungswerte, Pedalstellungen oder Energiespeicherströme sein. Mit zunehmender Zahl von Fahrten eines bestimmten Fahrers kann es möglich sein, charakteristische Merkmale seines Fahrverhaltens zu erkennen. Diese Merkmale erweisen sich möglicherweise als ungünstig für die Temperaturentwicklung des Energiespeichers wie etwa häufige Fahrmanöver bei maximaler Fahrzeugtraktion. Wird ein bestimmter Fahrer vor Antritt einer bevorstehenden Route vom Fahrzeug identifiziert, kann sein Fahrprofil in Form eines weiteren Gewichtungsfaktors, nämlich des Fahrer-Gewichtungsfaktors $g_F$, bei der Temperaturregelung des Energiespeichers berücksichtigt werden. Bei einem Fahrer, bei dem ein hoher Wärmeeintrag in den Energiespeicher zu erwarten ist, kann zum Beispiel eine Verschiebung der oberen Temperaturgrenze in Richtung kleinerer Temperatur gemäß $T_{oG} \propto -g_F \cdot g_W \cdot \int_t^{t+\Delta t} \widehat{P_V}(t)\,dt$ verstärkt werden. In diesem Fall wird der Gewichtungsfaktor $g_W$ größer 1 gesetzt.

Die Variation der beiden Temperaturgrenzen $T_{oG}$ und $T_{uG}$ kann beispielsweise in periodischen Zeitabständen oder bei signifikanten Änderungen der zeitabhängigen Energiespeicherdaten oder Fahrzeugbetriebsdaten erfolgen.

## Patentansprüche

1. Temperaturregelverfahren für einen elektrochemischen Energiespeicher in einem Fahrzeug, wobei der elektrochemische Energiespeicher zum Zweck seiner Kühlung über eine Kühleinrichtung verfügt, und wobei ein Temperatur-Istwert des elektrochemischen Energiespeichers mit einem Temperaturmessmittel bestimmt und ein Temperatur-Sollwert des elektrochemischen Energiespeichers durch eine Zwei-Punkt-Regeleinrichtung eingestellt wird, welche die Kühleinrichtung bei einer oberen Temperaturgrenze des elektrochemischen Energiespeichers aktiviert und welche die Kühleinrichtung bei einer unteren Temperaturgrenze des elektrochemischen Energiespeichers deaktiviert, wobei

- die obere Temperaturgrenze der Zwei-Punkt-Regeleinrichtung und/oder die untere Temperaturgrenze der Zwei-Punkt-Regeleinrichtung während des Betriebs des elektrochemischen Energiespeichers oder während der Aktivierung der Kühleinrichtung zeitabhängig festgelegt wird,
- die obere Temperaturgrenze der Zwei-Punkt-Regeleinrichtung und/oder die untere Temperaturgrenze der Zwei-Punkt-Regeleinrichtung in Abhängigkeit von Energiespeicherdaten oder in Abhängigkeit von Energiespeicherdaten und Fahrzeugbetriebsdaten festgelegt wird,
- die Energiespeicherdaten eine zeitabhängige Aufzeichnung des Lade-und Entladestroms des elektrochemischen Energiespeichers und eine zeitabhängige Aufzeichnung der Spannung des elektrochemischen Energiespeichers enthalten,
- aus der Aufzeichnung des Stroms und der Aufzeichnung der Spannung ein zeitabhängiger relativer Ladezustand des elektrochemischen Energiespeichers bestimmt wird, und
- die obere Temperaturgrenze der Zwei-Punkt-Regeleinrichtung und/oder die untere Temperaturgrenze der Zwei-Punkt-Regeleinrichtung in Abhängigkeit von dem zeitabhängigen relativen Ladezustand festgelegt werden,

**dadurch gekennzeichnet,**

- **dass** aus der Aufzeichnung des Stroms und der Aufzeichnung der Spannung ein zeitabhängiger Innenwiderstand des elektrochemischen Energiespeichers bestimmt wird, und
- **dass** die obere Temperaturgrenze der Zwei-Punkt-Regeleinrichtung und/oder die untere Temperaturgrenze der Zwei-Punkt-Regeleinrichtung in Abhängigkeit von dem zeitabhängigen Innenwiderstand festgelegt werden.

2. Temperaturregelverfahren nach Anspruch 1, **dadurch gekennzeichnet,**

- **dass** die Energiespeicherdaten und die Fahrzeugbetriebsdaten auf mindestens einem Steuergerät des Fahrzeugs oder einem Speichermedium des Fahrzeugs gespeichert werden,
- **dass** die Energiespeicherdaten und die Fahr-

EP 2 652 833 B1

zeugbetriebsdaten mit Messmitteln im Fahrzeug bestimmt werden oder durch Berechnung, die auf einem Steuergerät durchgeführt wird, bestimmt werden oder durch Simulation, die auf einem Steuergerät durchgeführt wird, bestimmt werden oder von einer Kommunikationseinrichtung des Fahrzeugs empfangen werden und
- **dass** die Energiespeicherdaten und die Fahrzeugbetriebsdaten als Eingangsgrößen des Temperaturregelverfahrens dienen.

3. Temperaturregelverfahren nach Anspruch 1 oder 2, **dadurch gekennzeichnet,**

- **dass** die Energiespeicherdaten eine Aufzeichnung des Temperatur-Istwerts des elektrochemischen Energiespeichers in Abhängigkeit von der Zeit enthalten,
- **dass** ein zeitabhängiger Temperaturgradient aus der Aufzeichnung des Temperatur-Istwerts bestimmt wird, und
- **dass** die obere Temperaturgrenze der Zwei-Punkt-Regeleinrichtung und/oder die untere Temperaturgrenze der Zwei-Punkt-Regeleinrichtung in Abhängigkeit von dem zeitabhängigen Temperaturgradienten festgelegt werden.

4. Temperaturregelverfahren nach einem der Ansprüche 1 bis 3, **dadurch gekennzeichnet,**

- **dass** die Fahrzeugbetriebsdaten eine zeitabhängige Aufzeichnung einer Umgebungstemperatur des Fahrzeugs enthalten, und
- **dass** die obere Temperaturgrenze der Zwei-Punkt-Regeleinrichtung und/oder die untere Temperaturgrenze der Zwei-Punkt-Regeleinrichtung in Abhängigkeit von der Umgebungstemperatur festgelegt werden.

**Claims**

1. A temperature control method for an electrochemical energy store in a vehicle, wherein the electrochemical energy store has a cooling device for the purpose of cooling it, and wherein an actual temperature value of the electrochemical energy store is determined using a temperature measuring means and a desired temperature value of the electrochemical energy store is set by a two-point control device, which activates the cooling device at an upper temperature limit of the electrochemical energy store and which deactivates the cooling device at a lower temperature limit of the electrochemical energy store, wherein

- the upper temperature limit of the two-point control device and/or the lower temperature limit of the two-point control device is fixed in a time-dependent manner during the operation of the electrochemical energy store or during the activation of the cooling device,
- the upper temperature limit of the two-point control device and/or the lower temperature limit of the two-point control device is fixed depending on energy storage data or depending on energy storage data and vehicle operating data,
- the energy storage data contain a time-dependent recording of the charge and discharge current of the electrochemical energy store and a time-dependent recording of the voltage of the electrochemical energy store,
- a time-dependent relative charge state of the electrochemical energy store is determined from the recording of the current and the recording of the voltage, and
- the upper temperature limit of the two-point control device and/or the lower temperature limit of the two-point control device are fixed depending on the time-dependent relative charge state,

**characterised in**

- **that** a time-dependent internal resistance of the electrochemical energy store is determined from the recording of the current and the recording of the voltage, and
- **that** the upper temperature limit of the two-point control device and/or the lower temperature limit of the two-point control device are fixed depending on the time-dependent internal resistance.

2. A temperature control method according to claim 1, **characterised in**

- **that** the energy storage data and the vehicle operating data are stored on at least one control apparatus of the vehicle or a storage medium of the vehicle,
- **that** the energy storage data and the vehicle operating data are determined using measuring means in the vehicle or are determined by calculation, which is carried out on a control apparatus, or are determined by simulation, which is carried out on a control apparatus, or are received from a communication device of the vehicle and
- **that** the energy storage data and the vehicle operating data are used as input variables for the temperature control method.

3. A temperature control method according to claim 1 or 2, **characterised in**

- **that** the energy storage data contain a recording of the actual temperature value of the electrochemical energy store depending on the time,
- **that** a time-dependent temperature gradient is determined from the recording of the actual temperature value, and
- **that** the upper temperature limit of the two-point control device and/or the lower temperature limit of the two-point control device is fixed depending on the time-dependent temperature gradient.

4. A temperature control method according to any one of claims 1 to 3, **characterised in**

- **that** the vehicle operating data contain a time-dependent recording of an ambient temperature of the vehicle, and
- **that** the upper temperature limit of the two-point control device and/or the lower temperature limit of the two-point control device are fixed depending on the ambient temperature.

## Revendications

1. Procédé de régulation thermique d'un accumulateur d'énergie électrochimique d'un véhicule, l'accumulateur d'énergie électrochimique comportant une installation de refroidissement pour assurer son refroidissement, et procédé selon lequel,

- on détermine la valeur réelle de la température de l'accumulateur d'énergie électrochimique à l'aide d'un moyen de mesure de la température et on régule à l'aide d'une installation de régulation à deux points sur la valeur de consigne de la température de l'accumulateur d'énergie électrochimique, cette installation de régulation activant l'installation de refroidissement a une limite supérieure de température de l'accumulateur d'énergie électrochimique et qui coupe l'installation de refroidissement pour une limite inférieure de température de l'accumulateur d'énergie électrochimique,
- la limite supérieure de température de l'installation de régulation à deux points et/ou la limite inférieure de température de l'installation de régulation à deux points seront fixés pendant le fonctionnement de l'accumulateur d'énergie électrochimique ou pendant l'activation de l'installation de refroidissement,
- la limite supérieure de température de l'installation de régulation à deux points et/ou la limite inférieure de température de l'installation de régulation à deux points étant fixée en fonction des données de l'accumulateur d'énergie ou en fonction des données d'accumulation d'énergie et des données de fonctionnement du véhicule,
- les données d'accumulation d'énergie contiennent l'enregistrement en fonction du temps du courant de charge et du courant de décharge de l'accumulateur d'énergie électrochimique et un enregistrement en fonction du temps de la tension de l'accumulateur d'énergie électrochimique,
- à partir de l'enregistrement de l'intensité, et de l'enregistrement de la tension, on détermine un état de charge relatif en fonction du temps de l'accumulateur d'énergie électrochimique, et
- on fixe la limite supérieure de température de l'installation de régulation à deux points et/ou la limite inférieure de température de l'installation de régulation à deux points en fonction de l'état de charge relatif dépendant du temps,

procédé **caractérisé en ce que**

- à partir de l'enregistrement de l'intensité de l'enregistrement de la tension on détermine la résistance interne dépendant du temps de l'accumulateur d'énergie électrochimique, et
- on fixe la limite supérieure de la température de l'installation de régulation à deux points et/ou la limite inférieure de la température de l'installation de régulation à deux points en fonction de la résistance interne dépendant du temps.

2. Procédé de régulation thermique selon la revendication 1, **caractérisé en ce qu'**

- on enregistre les données de l'accumulateur d'énergie et les données de fonctionnement du véhicule dans au moins un appareil de commande du véhicule ou un support d'enregistrement du véhicule,
- on détermine les données de l'accumulateur d'énergie et les données de fonctionnement du véhicule avec des moyens de mesure du véhicule ou par le calcul effectué dans un appareil de commande ou par la simulation effectuée dans l'appareil de commande ou par la réception à l'aide d'une installation de communication du véhicule, et
- les données de l'accumulateur d'énergie et les données de fonctionnement du véhicule servent de grandeurs d'entrée au procédé de régulation thermique.

3. Procédé de régulation thermique selon la revendication 1 ou 2, **caractérisé en ce que**
les données d'accumulateur d'énergie contiennent l'enregistrement de la valeur réelle de la température de l'accumulateur d'énergie électrochimique en fonction du temps, et

- on détermine un gradient de température en fonction du temps à partie de l'enregistrement de la valeur réelle de la température, et
- on fixe la limite supérieure de température de l'installation de régulation à deux points et/ou la limite inférieure de température de l'installation de régulation à deux points en fonction du gradient de température dépendant du temps.

4. Procédé de régulation de température selon l'une des revendications 1 à 3,
   **caractérisé en ce que**

   - les données de fonctionnement du véhicule contiennent l'enregistrement en fonction du temps de la température ambiante du véhicule et/ou la limite supérieure de la température de l'installation de régulation à deux points et/ou la limite inférieure de la température de l'installation de régulation à deux points sont fixées en fonction de la température ambiante.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2068390 A1
- JP 2001105843 A

- US 20080012535 A1